# EUROPEAN PATENT SPECIFICATION

(11) **EP 2 676 849 B1**
(45) Date of publication and mention of the grant of the patent: **09.11.2016**
(21) Application number: 13172285.2
(22) Date of filing: 17.06.2013
(51) Int. Cl.: B60R 16/02, E05B 1/00

(54) **Control unit for vehicle door**
Steuereinheit für Fahrzeugtür
Unité de commande pour portière de véhicule

(30) Priority: 19.06.2012 SE 1250647
(43) Date of publication of application: 25.12.2013
(73) Proprietor: Scania CV AB, 151 87 Södertälje (SE)
(72) Inventor: Lang, Christer, SE-618 30 Kolmården (SE); Magnusson, Rickard, SE-146 40 Tullinge (SE)
(74) Representative: Scania CV AB

(56) References cited:
- WO-A2-2004/053661
- DE-A1-102005 041 081
- DE-A1-102007 049 900
- DE-A1-102008 049 118
- US-A1- 2006 175 185
- US-A1- 2007 126 242
- US-B1- 6 445 082

## Description

### TECHNICAL FIELD OF THE INVENTION

The present invention concerns a control unit preferably for disposal/installation on the inside of a vehicle door and arranged so that said control unit can control an electrical or mechanical door lock. The invention is intended primarily for heavier/commercial vehicles such as goods vehicles and the like, but can naturally also be used in other vehicles with lockable doors and a risk of break-in, such as cars, construction machinery, airplanes, aquatic vessels etc. The invention also concerns a vehicle equipped with a control unit according to the invention.

### BACKGROUND OF THE PRIOR ART

Vehicles are normally equipped with lockable doors to prevent break-ins and thefts from the vehicles, and to reduce the risk of the driver being assaulted and robbed. A vehicle is normally equipped with a lock mechanism in the door that is controlled/regulated by either electrical or mechanical means. Mechanical and electrical locks can be installed in parallel during the production of vehicles, and on the same types of vehicles. In both cases a control or actuating unit disposed on the inside of the driver door is utilized, which unit is usually disposed in the inside panel of the door in a location that is readily accessible to the driver, so that the driver can, by means of a simple manipulation, control the impulse that sets the lock in its locked or unlocked position. Different control units are used at present for the different lock types. Electrical lock designs are normally unlocked or locked by means of an electrical button or switch, the actuation of which influences an electrical motor or solenoid in the lock. Mechanical lock designs are normally controlled by means of a mechanical control that transfers a motion via a drawbar or cables, thereby influencing the locking/unlocking mechanism of the lock.

It is important, from the standpoint of both the comfort and safety of the user and from a production standpoint for the manufacturer, that the control unit for the door lock can be standardized in terms of its form and function and installed in the same location in the inside panel of the door. As a result, different variants of door panels do not need to be used, regardless of whether an electrical or a mechanical lock design is used in the door. This simplifies the manufacturing process and makes it more cost-effective. Further cost benefits are achieved if, in addition, largely the same components can be used in the relevant control unit for actuating and controlling both electrical and mechanical lock designs.

Using the same control unit and disposing the actuating control for locking or unlocking the door lock in the same location in the control unit are also advantageous in that evacuating the vehicle is also simplified, e.g. in a panic situation and particularly if the visibility in the cab is limited by darkness or smoke. In such crisis or panic situations it has been found that drivers will attempt to open the door in their accustomed manner, and readily forget whether the unlocking control is disposed elsewhere on the inside of the door. It is thus desirable for the vehicle to always be able to be unlocked using the normal and accustomed actuating control.

There are numerous known solutions and designs of control units for actuating door locks, and for their disposal on the inside of a vehicle door. US20070126242 describes, for example, a design comprising a housing that can house various actuating elements for controlling the lock. The actuator that controls the central lock of the vehicle can, for example, be inactivated so as to prevent opening of the door lock. The various embodiments of the design use the same lock housing and thus the same installation space in the vehicle door. This invention is focused on the design of the components in the vehicle door that perform the actual locking function in the door, and not on the control unit per se. DE102008049118 describes an actuating lever, which is arranged in the respective vehicle door. The actuating lever is designed such that locking and unlocking of all the vehicle doors and the vehicle flaps are carried out with the actuating lever.

Other solutions for control units are described in, for example, US2007/0095633**,** US6657316**,** US2006/0175185 etc, but none of them describes a modular design that makes it easy to change and adapt the control function in the control panel for an electrical or mechanical door lock.

The disadvantages of known solutions for control units consist in that they are not suitably flexible and easy to adapt to different door lock designs, and that they do not enable the same housing to be equipped with different actuating elements in a simple manner. The prior art thus provides no control unit that anticipates the present invention, or that is sufficiently flexible in an efficient, function and cost-effective manner.

### SUMMARY OF THE INVENTION

The object of the invention is to solve the foregoing problems and provide a control unit that can control the door lock in a vehicle door regardless of whether said lock is of the mechanical or electrical type.

A further object of the invention is that the control unit be equipped with an actuating control that can easily be replaced and adapted based on whether the door lock is of the mechanical or electrical type.

A further object of the invention is that the actuating control be disposed in the same location in the control unit, so that no new manipulation needs to be learned by the driver in order to operate the door lock mechanism, regardless of whether the door is equipped with a mechanical or an electrical door lock.

A further object of the invention is that the control unit be simple and functional in terms of its design, and easy to incorporate in a vehicle without modifications to the panel components of the vehicle.

A further object of the invention is that the control unit be easy to adapt to the relevant door lock design.

A further object of the invention is that the components involved consist of as few parts as possible, and that they be easy and inexpensive to fabricate.

These and other objects and advantages are achieved according to the invention by a device as defined by the features specified in the characterizing portion of independent claim 1.

Vehicle doors can thus be equipped with either mechanical or electrical lock designs, wherein the lock function is in both cases actuated, i.e. locked and/or unlocked, by means of an electrical impulse from the control unit disposed on the inside of the door. An electrical lock design is normally actuated by means of an electric switch, often a button that acts mechanically upon a circuit breaker, while a mechanical lock design is normally actuated by means of an actuating control that transfers a mechanical motion to the lock design in the vehicle door by means of drawbars or cables.

The invention is realized primarily by arranging the actuating control so as to generate an unlocking or locking impulse to the lock design of the vehicle door in the same location in the control unit, regardless of whether a mechanical or an electrical lock is installed in the vehicle door. The solutions entails that the housing of the control unit is arranged with a space in which either of at least two different modules are interchangeably disposable, so that the control unit is designed and prepared for two different functions, which are achieved in that different modularly designed actuating elements can be arranged in and used in the control unit, depending upon the desired function.

This is achieved partly in that the modules consist of actuating elements/lock buttons, for example, in that an electric switch is arranged in the control unit, and partly in that recesses for a mechanical actuating control are simultaneously arranged in the same part of the control unit. The switch is preferably disposed on a circuit board arranged inside the control unit in such a position that it can be acted upon by a rocker button or a button that is depressable against the effect of a spring force, which button is made of plastic or the like. Alternatively a rocker or pivotable actuating element is arranged in the same space but comprises a shaft/lever that can be coupled to an outer drawbar or cables, which are in turn in mechanical communication with the mechanical door lock.

The circuit board/control unit suitably also comprises switches and or actuating elements/buttons for controlling other functions in the vehicle, such as window-opening devices and external rearview mirrors.

Given a modular solution according to the invention, wherein the actuating elements for controlling electrical or mechanical lock designs are disposed in the same location in the control unit, neither the components in the door that surround the control unit nor the components that are arranged in the control unit itself are notably affected. The choice is thus between installing a single button for actuating an electrical lock or a limitedly pivotable actuating element for a mechanical lock. In the first case the control unit is connected by means of an electrical cable to the lock, while in the second case the control unit is connected by means of a cable or drawbar to the mechanical door lock. The control unit and its internal components are the same, and the control unit can also be modified for the relevant lock design after the fact.

The control unit is also equipped with a cable case top that is arranged or integrated in the plastic next to the control unit housing and equipped with grooves or recesses in the upper edge of the housing, proximate to but beneath the cover cap, which recesses function as bearing pivots for the actuating element/rocker. Because the sealed circuit board is disposed beneath all the switches in the control unit, it does not matter that the groove/recess is present, even if the control unit is to be used solely for an electrical door lock. The need for different types of cover plates in the control unit is obviated, as no cavities need to be covered.

Nor does the solution according to the invention require any changes in the inside panel of the door, which means that it is easy and inexpensive to implement the new solution in a production line for manufacturing new vehicles. This solution according to the invention also makes it possible to upgrade control units on vehicles already produced.

Additional features and advantages of the invention are presented in the following more detailed description of the invention, and in the accompanying drawings and other claims.

### BRIEF LIST OF DRAWINGS

The invention is described in greater detail below in several preferred exemplary embodiments, based on the accompanying drawings.
**Figure 1** shows a block diagram, in a perspective view, of a commonly occurring vehicle door equipped with a control unit for controlling an electrical door lock, wherein the door is shown without its inside panel for the sake of clarity.
**Figure 2** shows a control unit according to the invention equipped with recesses for a mechanical control unit and a cable case lock arranged at the side of the control unit, but here equipped with a button for controlling an electrical door lock.
**Figure 3** shows a control unit according to the invention with a mechanical actuating element for controlling a mechanical door lock.

### DESCRIPTION OF PREFERRED EMBODIMENTS

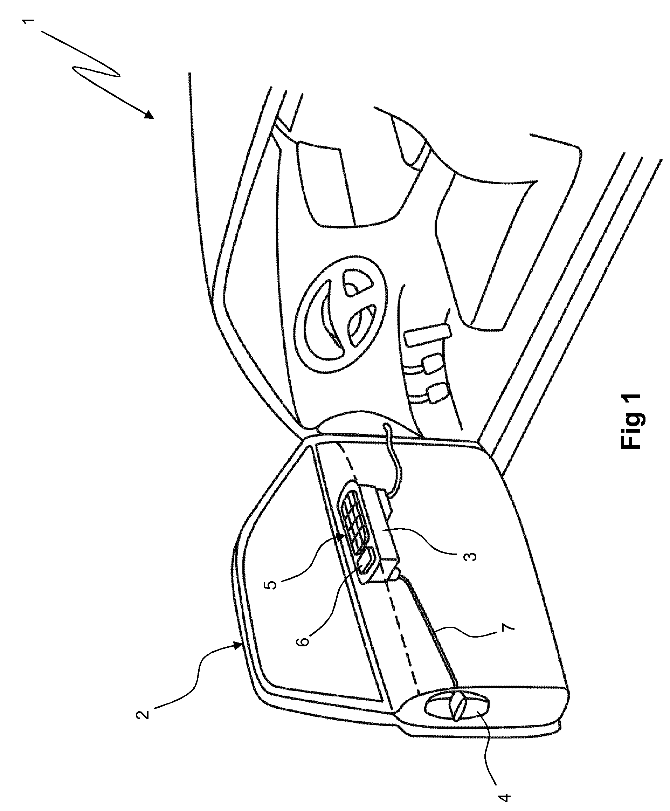

**Figure 1** shows a block diagram, in a perspective view, of a commonly occurring vehicle 1 with a door 2 equipped with a control unit 3 for electrical control of a lock 4 arranged in the rear edge of the door 2. The door 2 is shown here without its inside panel for the sake of clarity. The control unit 3 comprises a plurality of actuating elements or buttons 5 by means of which a driver can adjust the side windows, external rearview mirrors etc of the vehicle. The driver can, by means of an additional actuating element, i.e. a lock button 6, control the door lock 4, i.e. send an electrical impulse that locks or unlocks the door lock 4. An electrical wire 7 transfers the impulse between the control unit 3 and the lock 4.

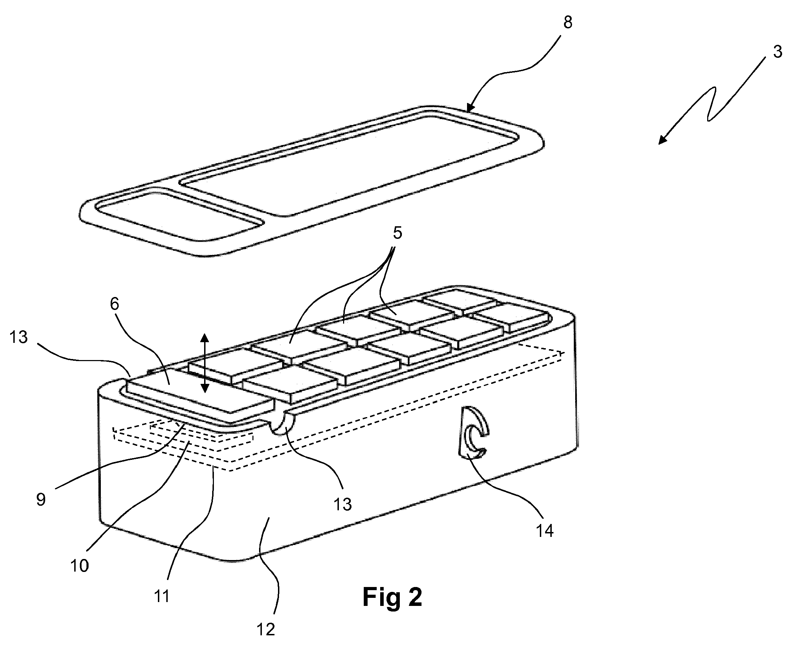

**Figure 2** shows a control unit 3 according to the invention without obscuring surrounding door components, and with an upper cover cap 8 removed. The control unit 3 is, as noted above, equipped with a number of actuating elements 5,6 that are, for example, square or rectangular in shape and made of plastic, which elements mechanically influence, when physically activated by means of, for example, elements 9, a switch 10 (only one indicated by a broken line) mounted on a circuit board 11(indicated by broken lines) disposed inside the control unit housing 12 immediately below the actuating elements 5,6. The side walls of the housing 12 are provided at their upper edges with recesses 13, and a cable case lock 14 is arranged on one side of the housing 12, which cable case lock is either mounted on the housing 12 or integrated with the housing 12. The control unit 3 is, in this exemplary embodiment, equipped with an essentially flat and rectangular lock button 6 made of plastic, by means of which the electrical door lock can be controlled. The cover cap 8 is mostly a design detail, and its primary function is to protect the interior of the control unit 3 so that dust and impurities do not penetrate and affect or damage the function of the control unit 3.

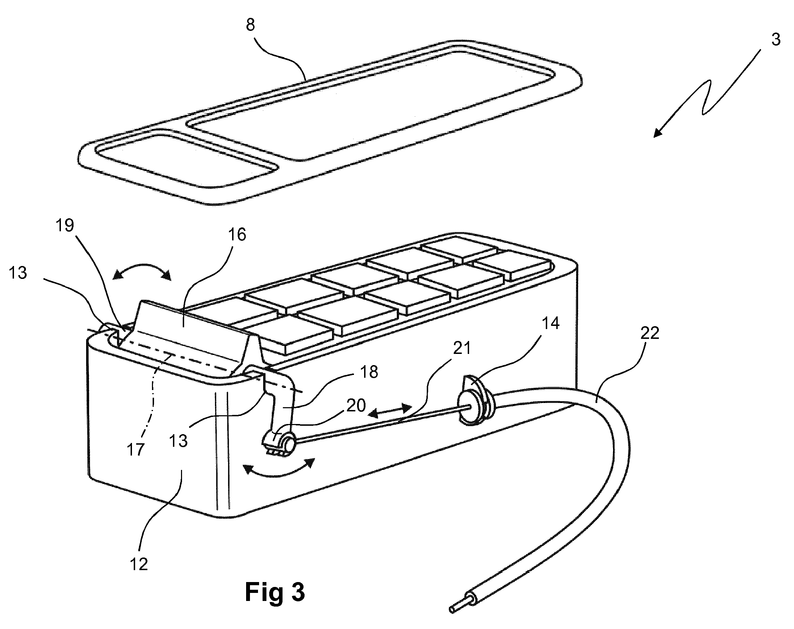

**Figure 3** shows the control unit 3 according to the invention equipped with an actuating device, e.g. in the form of a lock button 16 with a rocker function for controlling a mechanical door lock. The lock button 16 replaces the pushbutton 6 in Figure 2, and is limitedly pivotable or rotatable about a shaft 17 forward or backward in the longitudinal direction of the control unit 3.

On one short side of the lock button 16 there is arranged an arm 18 that extends out through the sidewall of the housing 12. The arm 18 is provided with an angled portion, the angle portion, which extends downward in relation to the lock button 16 and its shaft 17 and constitutes a lever that amplifies the pivoting motion of the lock button 16, whereupon a lever is formed that describes a swinging motion when the rocker button is activated by the user. The swinging motion amplifies the pivoting motion of the rocker button 16. The pivot points of the lock button 16 are both disposed in the recesses 13 of the housing 12, and the fastening of the arm 18 functions as a pivot point. An additional pivot point 19 is disposed at the other short side of the lock button 16.

In the lower/outer end of the arm there is arranged a cable fastener 20 in which a cable 21 can be mounted, for example by means of a clamping or snapping arrangement. A mechanical pivoting motion in the rocker button 16 can, by means of this arrangement, generate an axial displacement of the cable 21, which in turn mechanically influences the mechanical lock of the driver side door (not shown).

The cable case lock 14 is intended to make it possible to easily install, for example by securely pressing/snapping, a cable case 22, and to thereby secure same in a given position in the housing 12.

The foregoing description is intended primarily to facilitate an understanding of the invention, and naturally is not limited to the presented embodiments, but rather other variants of the invention are possible and conceivable within the framework of the concept of the invention and the protective scope of the following claims.

## Claims

1. A control unit (3) for installation on the inside of a vehicle door and intended to control the lock function of the vehicle door lock (4) comprising a housing (12) with at least one actuating element (5,6) for electrical or mechanical control of the lock function and the housing (12) is arranged with a space in which either of at least two different modules (6,16) are interchangeably disposable
**characterized in that**
the modules consist of actuating elements/lock buttons (6,16), at least the one module, a lock button (16), is arranged so as to be pivotably mounted on bearings about a shaft (17) in recesses (13) in the housing (12), further the lock button (16) is equipped with an arm (18) arranged so as to extend out from the housing (12) through one of the recesses (13).

2. A control unit (3) according to claim 1,
**characterized in that**
the lock button (16) is arranged so as to generate, in connection with its physical activation/actuation, a pivoting or swinging motion about the shaft (17).

3. A control unit (3) according to any of claims 1-2,
**characterized in that**
the fastening of the arm (18) in the recess (13) constitutes a pivot point.

4. A control unit (3) according to any of claims 1-3,
**characterized in that**
an additional pivot point (19) is arranged at the opposite short side of the lock button (16).

5. A control unit (3) according to any of claims 1-4,
**characterized in that**
the arm (18) is equipped with an angle portion that extends downward in relation to the lock button (16) and its shaft (17) and constitutes a lever that amplifies the pivoting motion of the lock button (16).

6. A control unit (3) according to any of claims 1-5,
**characterized in that**
in the outermost end of the arm (18) there is arranged a fastener (20) for installing, for example, a cable (21), which transfers a mechanical motion to the door lock (4).

7. A control unit (3) according to claim 6,
**characterized in that**
the fastener (20) consists of a clamp or snap device.

8. A control unit (3) according to any of claims 1-7,
**characterized in that**
the arm (18) is arranged so as to generate an axial displacement of the cable (21), which motion can be transferred to the door lock (4).

9. A control unit (3) according to any of claims 6-8,
**characterized in that**
a cable case lock (14) is arranged on the outside of the control unit housing (12) and intended to secure the case for the cable (21).

10. A vehicle equipped with a control unit according to any of claims 1-9.

## Patentansprüche

1. Steuereinheit (3) zum Anbringen an die Innenseite einer Fahrzeugtür, die dazu eingerichtet ist, die Schließfunktion des Fahrzeugtürschlosses (4) zu steuern, umfassend ein Gehäuse (12) mit wenigstens einem Betätigungselement (5, 6) zum elektrischen oder mechanischen Steuern der Schließfunktion, wobei das Gehäuse (12) mit einem Raum ausgebildet ist, in dem eines von wenigstens zwei verschiedenen Modulen (6, 16) austauschbar einsetzbar ist,
**dadurch gekennzeichnet, dass**
die Module Betätigungselemente/Schließknöpfe (6, 16), das wenigstens ein Modul und einen Schließknopf (16) umfassen, der dazu ausgebildet ist, dass er schwenkbar an Auflagern über eine Welle (17) in Ausnehmungen (13) in dem Gehäuse (12) angebracht ist, wobei der Schließknopf (16) ferner mit einem Arm (18) versehen ist, der dazu ausgebildet ist, dass er sich von dem Gehäuse (12) heraus durch eine der Ausnehmungen (13) erstreckt.

2. Steuereinheit (3) nach Anspruch 1, **dadurch gekennzeichnet, dass** der Schließknopf (16) dazu ausgebildet ist, dass er in Verbindung mit seiner physischen Aktivierung/Betätigung eine Schwenk- oder Schwingbewegung über der Welle (17) erzeugt.

3. Steuereinheit (3) nach einem der Ansprüche 1-2, **dadurch gekennzeichnet, dass** die Befestigung des Arms (18) in der Ausnehmung (13) einen Schwenkpunkt erzeugt.

4. Steuereinheit (3) nach einem der Ansprüche 1-3, **dadurch gekennzeichnet, dass** ein zusätzlicher Schwenkpunkt (19) an der entgegengesetzten kurzen Seite des Schließknopfs (16) ausgebildet ist.

5. Steuereinheit (3) nach einem der Ansprüche 1-4, **dadurch gekennzeichnet, dass** der Arm (18) mit einem Winkelabschnitt versehen ist, der sich hinsichtlich des Schließknopfs (16) und seiner Welle (17) abwärts erstreckt und einen Hebel bildet, der die Schwenkbewegung des Schließknopfs (16) verstärkt.

6. Steuereinheit (3) nach einem der Ansprüche 1-5, **dadurch gekennzeichnet, dass** an dem äußersten Ende des Arms (18) eine Halterung (20) zum Anbringen beispielsweise eines Kabels (21) ausgebildet ist, das eine mechanische Bewegung zu dem Türschloss (4) überträgt.

7. Steuereinheit (3) nach Anspruch 6, **dadurch gekennzeichnet, dass** die Halterung (20) eine Klemme oder eine Schnappvorrichtung umfasst.

8. Steuereinheit (3) nach einem der Ansprüche 1-7, **dadurch gekennzeichnet, dass** der Arm (18) dazu ausgebildet ist, dass er eine axiale Verschiebung des Kabels (21) erzeugt, wobei die Bewegung an das Türschloss (4) übertragen werden kann.

9. Steuereinheit (3) nach einem der Ansprüche 6-8, **dadurch gekennzeichnet, dass** ein Kabelgehäuseschloss (14) an der Außenseite des Steuereinheitgehäuses (12) ausgebildet und dazu eingerichtet ist, das Gehäuse für das Kabel (21) zu befestigen.

10. Fahrzeug, das mit einer Steuereinheit nach einem der Ansprüche 1-9 versehen ist.

## Revendications

1. Unité de commande (3) destinée à une installation à l'intérieur d'une porte de véhicule, et conçue de façon à commander la fonction de verrouillage de la serrure de la porte de véhicule (4), comprenant un boîtier (12) qui comporte au moins un élément d'actionnement (5, 6) pour une commande électrique ou mécanique de la fonction de verrouillage, le boîtier (12) étant agencé avec un espace dans lequel l'un ou l'autre d'au moins deux modules différents (6, 16) peuvent être disposés de manière interchangeable,
**caractérisée en ce que** les modules sont constitués par des éléments d'actionnement/boutons de verrouillage (6, 16), au moins le premier module, un bouton de verrouillage (16), étant agencé de façon à être monté pour pouvoir pivoter sur des paliers autour d'un arbre (17) dans des cavités (13) du boîtier (12), le bouton de verrouillage (16) étant de plus équipé d'un bras (18) agencé de façon à s'étendre vers l'extérieur depuis le boîtier (12) en traversant l'une des cavités (13).

2. Unité de commande (3) selon la revendication 1, **caractérisée en ce que** le bouton de verrouillage (16) est agencé de façon à générer, en association avec son activation/actionnement physique, un mouvement de pivotement ou d'oscillation autour de l'arbre (17).

3. Unité de commande (3) selon l'une quelconque des revendications 1 à 2, **caractérisée en ce que** la fixation du bras (18) dans la cavité (13) constitue un point de pivot.

4. Unité de commande (3) selon l'une quelconque des revendications 1 à 3, **caractérisée en ce qu'**un point de pivot additionnel (19) est situé sur le côté court opposé du bouton de verrouillage (16).

5. Unité de commande (3) selon l'une quelconque des revendications 1 à 4, **caractérisée en ce que** le bras (18) est équipé d'une partie en angle qui s'étend vers le bas par rapport au bouton de verrouillage (16) et à son arbre (17), et qui constitue un levier qui amplifie le mouvement de pivotement du bouton de verrouillage (16).

6. Unité de commande (3) selon l'une quelconque des revendications 1 à 5, **caractérisée en ce que**, dans l'extrémité située le plus à l'extérieur du bras (18) est disposé un élément de fixation (20) pour l'installation, par exemple, d'un câble (21), qui transfère un mouvement mécanique à la serrure de porte (4).

7. Unité de commande (3) selon la revendication 6, **caractérisée en ce que** l'élément de fixation (20) est constitué par un dispositif de serrage ou d'encliquetage.

8. Unité de commande (3) selon l'une quelconque des revendications 1 à 7, **caractérisée en ce que** le bras (18) est agencé de façon à générer un déplacement axial du câble (21), ce déplacement pouvant être transféré à la serrure de porte (4).

9. Unité de commande (3) selon l'une quelconque des revendications 6 à 8, **caractérisée en ce qu'**une serrure à enveloppe de câble (14) est disposée à l'extérieur du boîtier d'unité de commande (12), et est conçue de façon à attacher l'enveloppe du câble (21).

10. Véhicule équipé d'une unité de commande selon l'une quelconque des revendications 1 à 9.
